# EUROPÄISCHE PATENTSCHRIFT

(11) **EP 3 167 223 B1**
(45) Veröffentlichungstag und Bekanntmachung des Hinweises auf die Patenterteilung: **14.03.2018**
(21) Anmeldenummer: 15735912.6
(22) Anmeldetag: 03.07.2015
(51) Int. Cl.: F17C 13/12

(54) **VORRICHTUNG ZUM SCHUTZ EINES HOCHDRUCKGASBEHÄLTERS EINES KRAFTFAHRZEUGS, HOCHDRUCKGASBEHÄLTER FÜR EIN KRAFTFAHRZEUG SOWIE VERFAHREN ZUR HERSTELLUNG EINES HOCHDRUCKGASBEHÄLTERS**
DEVICE FOR PROTECTING A HIGH-PRESSURE GAS TANK IN A MOTOR VEHICLE, HIGH-PRESSURE GAS TANK FOR A MOTOR VEHICLE, AND METHOD FOR THE PRODUCTION OF A HIGH-PRESSURE GAS TANK
DISPOSITIF POUR PROTÉGER UN CONTENANT DE GAZ HAUTE PRESSION D'UN VÉHICULE AUTOMOBILE, CONTENANT DE GAZ HAUTE PRESSION POUR UN VÉHICULE AUTOMOBILE ET PROCÉDÉ POUR FABRIQUER UN CONTENANT DE GAZ HAUTE PRESSION

(30) Priorität: 11.07.2014 DE 102014213585
(43) Veröffentlichungstag der Anmeldung: 17.05.2017
(73) Patentinhaber: Bayerische Motoren Werke Aktiengesellschaft, 80809 München (DE)
(72) Erfinder: SCHWARTZ, Christophe, 81377 München (DE)
(86) Internationale Anmeldenummer: PCT/EP2015/065177
(87) Internationale Veröffentlichungsnummer: WO 2016/005278

(56) Entgegenhaltungen:
- CA-A1- 2 151 546
- FR-A1- 2 748 942
- FR-A1- 2 987 367
- GB-A- 2 016 670
- GB-A- 2 038 664
- US-A- 4 085 860
- US-A1- 2007 119 604

## Beschreibung

Die vorliegende Erfindung betrifft eine Vorrichtung zum Schutz eines Hochdruckgasbehälters eines Kraftfahrzeugs. Hochdruckgasbehälter, welche allgemein auch Composit-Behälter, Verbundwerkstoffbehälter oder Faserverbundbehälter genannt werden, umfassen in der Regel ganz oder teilweise faserverstärkte Materialschichten, die einen Liner umgeben. Der Liner ist oft aus Aluminium oder Stahl gebildet und beherbergt die komprimierten Gase, wie bspw. Druckluft, Sauerstoff, Methan, Wasserstoff, Kohlensäure etc. Auch Kunststoffliner (Vollcomposite-Behälter) sind bekannt. Solche Hochdruckgasbehälter werden beispielsweise in Fahrzeuge eingesetzt, die mit komprimiertem Erdgas, oft als compressed natural gas (CNG) bezeichnet, oder mit Wasserstoff betrieben werden.

Beim Einsatz solcher Hochdruckgasbehälter besteht das Risiko, dass dessen Struktur durch Hitzeeinwirkung geschwächt wird. Aus dem Stand der Technik bekannt ist der Einsatz von Sicherheitsventilen, sog. thermal pressure release devices (TPRD). Diese Sicherheitsventile dienen dem Brandschutz. Die Ausgestaltung der Sicherheitsventile bzw. Brandschutzventile ist bspw. durch die Norm EC79/2009 vorgegeben. Bei direkter Hitzeeinwirkung auf diese Sicherheitsventile (z.B. durch Flammen), wird das im Hochdruckgasbehälter gespeicherte Gas in die Umgebung abgelassen. Die Sicherheitsventile lassen das Gas ab, sobald eine Mindesttemperatur an dem Sicherheitsventil überschritten wird. Die Ventile sind in der Regel in einem Abstand von ca. 1 m voneinander entlang der Längsrichtung des Hochdruckgasbehälters angeordnet. Die wenigen Ventile entlang der großen Druckbehälter können dabei jeweils nur ein räumlich stark begrenztes Einzugsgebiete berücksichtigen. Eine kleine lokale Flamme, die zwischen zwei Ventilen auf den Tank einwirkt, kann den Hochdruckgasbehälter daher stark schädigen, ohne dass die Sicherheitseinrichtung aktiviert wird. Die durch die Hitzeeinwirkung einer lokalen Flamme entstehende Schädigung des Hochdruckgasbehälters, bspw. die Schädigung des lasttragenden Faserverbundwerkstoffes, kann zum Versagen und im Extremfall zum Bersten des Hochdruckgasbehälters führen. Die Hochdruckgasbehälter speichern Gase mit einem Druck von bis zu 875 bar. Dementsprechend kann das Bersten des Hochdruckgasbehälters zu einer sehr gefährlichen Schädigung des gesamten Fahrzeugs führen. Die Faserverbundschichten tragen in der Regel einen Hauptteil der Last. Die Beschädigung der faserverstärkten Materialschicht durch thermische oder mechanische Einflüsse kann somit schnell zur signifikanten Verringerung der Haltbarkeit bzw. zu einer signifikanten Schwächung des Bauteils führen. Aus der US 2011/0079403 A1 ist eine Vorrichtung bekannt, bei der eine Hydrat aufweisende Schicht oberhalb oder unterhalb eines Hochdruckgasbehälters angeordnet ist. Gemäß dieser Schrift sind diese Schichten beabstandet von dem Hochdrucktank an einem Paneel befestigt. Die Sicherheitsventile sowie deren Zuleitung sind zwischen dem Paneel und dem Hochdruckgasbehälter angeordnet. Zur Befestigung der Sicherheitsventile sowie deren Leitungen sind Schlingen um den Hochdruckgasbehälter vorgesehen. Die Montage dieser Sicherheitsventile sowie deren Zuleitung sind aufwändig. Ferner nimmt diese Ausführung einen relativ großen Bauraum ein. Gemäß dieser Druckschrift wird der Tank dadurch geschützt, dass lokal durch Volumenzunahme der Hydrat enthaltenden Schicht die Wärme absorbiert wird. Die US 4 085 860 A betrifft ein thermisches Schutzsystem.

Es ist eine bevorzugte Aufgabe der hier offenbarten Technologie, die Nachteile der vorbekannten Hochdruckgasbehälter zu verringern oder abzustellen. Die Aufgabe wird gelöst durch den Gegenstand des Patentanspruchs 1. Die abhängigen Patentansprüche stellen vorteilhafte Ausgestaltungen dar.

Es ist offenbart eine Vorrichtung zum Schutz eines Hochdruckgasbehälters eines Kraftfahrzeuges, bspw. eines Fahrzeuges, das mit Erdgas oder Wasserstoff betankt werden kann. Die Vorrichtung weist eine intumeszente Schicht auf, die den Hochdruckgasbehälter zumindest teilweise gegen eine Feuerquelle abschirmt. Die intumeszente Schicht weist ferner ein intumeszentes Metallmaterial auf.

Abschirmen bedeutet in diesem Zusammenhang, dass die intumeszente Schicht mechanische oder thermische Einwirkungen zumindest teilweise verringert und/oder verzögert. Mit anderen Worten bewirkt die intumeszente Schicht, dass sich der Hochdruckgasbehälter in den durch die intumeszente Schicht abgeschirmten Bereich des Hochdruckgasbehälter nicht so schnell erwärmt und/oder Stöße nicht so stark aufgenommen werden wie in den Bereichen, in denen die intumeszente Schicht den Hochdruckgasbehälter nicht abschirmt. Insbesondere ist die thermisch abschirmende Wirkung so, dass ein wirksamer Brandschutz entsteht, der die Wirkung des Feuers zumindest merklich hinauszögert.

Der Begriff Intumeszenz bezeichnet generell die Ausdehnung oder die Anschwellung, also die Größenzunahme eines festen Körpers unter Temperatureinwirkung. Im Brandschutz bezeichnet der Begriff das Schwellen bzw. Aufschäumen von Materialien. Intumeszente Materialien nehmen also unter Hitzeeinwirkung an Volumen zu und an Dichte ab. Dabei steigt das Volumen über das übliche Maß an Wärmedehnung wesentlich, oft um ein Vielfaches, an. Die physikalischen Eigenschaften ändern sich signifikant. Durch das Schwellen bzw. Aufschäumen entsteht beispielsweise eine Isolierschicht.

In der hier offenbarten Technologie fungiert die intumeszente Schicht als Hitzebremse und als mechanischer Schutz. Hydrate im Gegensatz zu Metallschäumen können nur in einem sehr geringen Maß einen mechanischen Schutz bieten. Intumeszente Metallmaterialien wie intumeszente Metallschäume weisen überdies den Vorteil auf, dass sie im Vergleich zu anderen intumeszenten Materialien eine relativ hohe Wärmeleitfähigkeit im nicht geschäumten Ursprungszustand aufweisen. Tritt nun lokal an einer Stelle eine starke Erwärmung, bspw. durch eine lokale Flamme, auf, so wird diese Wärme über eine größere Fläche der intumeszenten Metallschicht verteilt. Es kommt zu einer gleichmäßigeren Erwärmung des intumeszenten Metallmaterials. Die Verteilung der lokal einwirkenden Hitze in die Fläche verringert zunächst einmal die Geschwindigkeit, mit der die Stelle erhitzt wird, auf die die Hitze lokal einwirkt. Ferner kann auch bei einer kleinen lokalen Hitzeeinwirkung durch eine kleine Flamme bereits großflächig ein Metallschaum aufgebaut werden, der dann großflächig den Tank gegen die lokale Hitzeeinwirkung schützt. Ein weiterer Vorteil der vergleichsweise hohen Wärmeleitfähigkeit im Ausgangszustand vor der Volumenvergrößerung ist darin zu sehen, dass die lokal erzeugte Hitzeeinwirkung schnell bzw. schneller an das nächstgelegene Sicherheitsventil weitergeleitet werden kann. Somit kann das Sicherheitsventil im Vergleich zum Stand der Technik schneller bzw. früher öffnen und das gespeicherte Gas ablassen. Das intumeszente Metallmaterial kann überdies die faserverstärkten Materialschichten vor mechanischen Einwirkungen schützen.

Die intumeszente Schicht kann direkt am Hochdruckgasbehälter befestigbar sein. Beispielsweise kann die intumeszente Schicht auf den Hochdruckgasbehälter aufgeklebt sein oder durch sonstige Befestigungsmittel direkt an dem Hochdruckgasbehälter gehalten sein, bevorzugt anliegen. In einer weiteren Ausgestaltung ist die intumeszente Schicht mit einem geringen Abstand, bspw. weniger als 5 cm, bevorzugt weniger als 1 cm von der äußersten Schicht des Hochdruckgasbehälters beabstandet. Durch eine solche Ausgestaltung lässt sich der Bauraum für den Hochdruckgasbehälter im Kraftfahrzeug weiter verringern, z.B. um 10 bis 50 mm. Der Spalt zwischen der intumeszenten Schicht und äußersten Schicht des Hochdruckgasbehälters stellt eine zusätzliche Isolationsschicht dar. Insbesondere ist der Hochdruckgasbehälter bevorzugt also derart ausgestaltet, dass die Sicherheitsventile nicht durch die intumeszente Schicht vor der Flamme abgeschirmt sind. Vorteilhaft lässt sich somit das Ansprechverhalten der Sicherheitsventile weiter verbessern.

Das intumeszente Metallmaterial weist bevorzugt ein Metallpulver und ein Metalhydrid, z.B. Titaniumhydrid, auf. Das intumeszente Metallmaterial ist ferner bevorzugt als ein intumeszentes Aluminiummaterial ausgestaltet. Bevorzugt umfasst das intumeszente Aluminiummaterial eine Aluminiumlegierung und ein Treibmittel. Beispielsweise kann die intumeszente Schicht als eine Aluminiumlegierung mit einem Treibmittel Titanhydrid ausgeführt sein. Solche Aluminiumschäume dehnen sich unter Hitzeeinwirkung bspw. um den Faktor 4 aus, wobei ein Schaum mit einer porigen Struktur entsteht. Im aufgeschäumten Zustand weisen sie bspw. eine Dichte von ca. 0,6 g/cm³ auf. Das intumeszente Aluminiummaterial weist im nicht aufgeschäumten Ursprungszustand im Vergleich zu anderen intumeszenten Metallmaterialien eine geringe Dichte auf. Als Treibmittel können auch andere Metallhydride Anwendung finden. Ferner können neben Aluminium bspw. auch Kupfer, Zink, Blei oder Stahl/Eisen Anwendung finden.

Die intumeszente Schicht kann als Blech, als Platte oder als Folie ausgeführt sein. Beispielsweise kann die intumeszente Schicht als Folie um den Hochdruckgasbehälter zumindest teilweise gewickelt sein. Alternativ und/oder zusätzlich kann ein Halbzeug an dem Tank montiert werden. Ferner kann die intumeszente Schicht als im Querschnitt also bogenförmiges Profil, insbesondere als C- oder U- oder V- förmiges Profil und/oder als Rohr ausgebildet sein. Die C-förmige Ausgestaltung der intumeszenten Schicht 20 bewirkt im Vergleich zu der im Querschnitt rohrförmig ausgestalteten intumeszenten Schicht den Vorteil, dass das Gewicht reduziert werden kann, ohne dass der Schutz des Hochdruckgasbehälters stark eingeschränkt wird.

Bevorzugt ist der Hochdruckgasbehälter zumindest teilweise im Inneren aufgenommen. Eine solche Ausgestaltung ist besonders kostengünstig zu fertigen und weist vorteilhafte Baumaße auf. Das bogenförmige Profil kann im Querschnitt zumindest die Hälfte, bevorzugt zumindest mindestens 75% des Umfangs des Hochdruckgasbehälters umschließen.

Vorteilhaft weist die intumeszente Schicht eine Wandstärke von 0,1 mm bis 40 mm, bevorzugt von 3 mm bis 20 mm, und besonders bevorzugt von 6 mm bis 15 mm auf. Eine solche Ausgestaltung der intumeszenten Schicht weist ein günstiges Verhältnis von Gewicht zu abschirmender Wirkung auf, sowohl mechanisch als auch thermisch.

Vorteilhaft dehnt sich die intumeszente Schicht zumindest um das 1,5-fache, bevorzugt zumindest um 2-fache und besonders bevorzugt zumindest um das 4-fache ihrer ursprünglichen Wanddicke aus.

Es kann bevorzugt zumindest ein Befestigungsmittel zur Befestigung eines Sicherheitsventiles in bzw. an der intumeszenten Schicht vorgesehen sein. Beispielsweise kann die intumeszente Schicht, bevorzugt entlang der Längsachse, einstückig ausgebildete Formschlussmittel aufweisen, bspw. Klemmen, Bohrungen, Gewinde und/oder Einsätze an denen das bzw. die Sicherheitsventil(e) befestigbar sind. Mit dieser vorteilhaften Ausgestaltung kann es möglich sein, die bisher eingesetzten Schnallen zu ersetzen und somit preisgünstig die Befestigung der Sicherheitsventile bzw. der zu den Sicherheitsventilen führenden Leitungen zu erzielen. Durch den direkten Kontakt mit der intumeszenten Schicht kann die Wärme über Konduktion an das Sicherheitsventil weitergegeben werden, wodurch zusätzlich das Ansprechverhalten des Sicherheitsventiles bzw. Sicherheitsventiles verbessert werden kann. Bevorzugt ist das Sicherheitsventil auf der Außenseite der intumeszenten Schicht angeordnet. Mit anderen Worten ist auf der einen Seite der intumeszenten Schicht der Liner des Hochdruckgasbehälters angeordnet und auf der anderen Seite das Sicherheitsventil.

Die hier offenbarte Technologie umfasst ebenfalls einen Hochdruckgasbehälter mit der hierin beschriebenen Vorrichtung zum Schutz des Hochdruckgasbehälters.

Bevorzugt weist der Hochdruckgasbehälter eine faserverstärkte Schicht auf. Die faserverstärkte Schicht kann einen Liner, beispielsweise aus Aluminium, des Behälters umschließen. Als faserverstärkte Kunststoffe kommen bspw. CFK und GFK zum Einsatz. Vorteilhaft ist die intumeszente Schicht auf der äußeren Oberfläche der faserverstärkten Schicht zumindest teilweise aufgebracht.

Die hier offenbarte Technologie umfasst bevorzugt ein Verfahren zur Herstellung des hier offenbarten Hochdruckbehälters. Das Verfahren weist bevorzugt die folgenden Schritte auf:
- Bereitstellen eines Kerns eines Hochdruckgasbehälters;
- Bereitstellen der intumeszenten Schicht; und/oder
- zumindest teilweises Aufschieben oder zumindest teilweises Umwickeln des Kerns mit der intumeszenten Schicht.

Bevorzugt kann ein Kern des Hochdruckgasbehälters im Inneren des bogenförmigen Profils verklemmt werden. Ferner vorteilhaft kann das Verfahren den Schritt aufweisen: Befestigen von mindestens einem Sicherheitsventil an der äußeren Oberfläche der intumeszenten Schicht. Als Kern ist hier der Liner des Hochdruckgasbehälters samt etwaiger zusätzlichen Materialschichten, beispielsweiser einer faserverstärkten Materialschicht, anzusehen. Die hier offenbarte Technologie wird nun anhand der folgenden Figuren beispielhaft beschrieben, wobei
- Fig. 1: eine Querschnittszeichnung eines Hochdruckgasbehälters,
- Fig. 2: eine vergrößerte Ansicht des Details A der Fig. 1, und
- Fig. 3: eine schematische Schnittansicht durch ein Fahrzeug
zeigen.

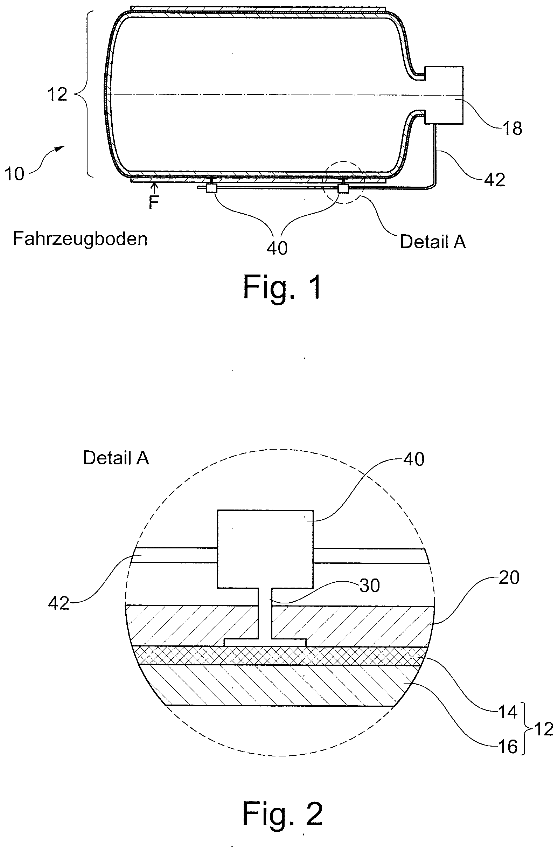

Fig. 1 zeigt eine Querschnittsansicht des Hochdruckgasbehälters 10. Der Kern 12 des Hochdruckgasbehälters 10 umfasst einen Liner 16, hier bspw. einen Aluminiumliner 16 sowie eine faserverstärkte Schicht 14, die den Liner 16 umgibt und die Festigkeit des Hochdruckgasbehälters 10 steigert. Auf diesen Kern 12 ist hier die intumeszente Schicht 20 aufgebracht. Die intumeszente Schicht 20 liegt hier direkt an dem Kern 12 an. Die intumeszente Schicht 20 ist hier als ein intumeszentes Aluminiummaterial ausgeführt. Die Sicherheitsventile 40 sind entlang der Längsachse des Hochdruckgasbehälters 10 jeweils 1 m voneinander beabstandet und mit dem Einlass 18 des Hochdruckgasbehälters durch die Verbindungsleitung 42 verbunden. Der Pfeil F stellt eine lokale thermische Hitzeeinwirkung dar, die vom Sicherheitsventil 40 beabstandet auftritt. Die eintreffende Hitze wird wegen der relativ guten Wärmeleitfähigkeit über die Fläche der Schicht 20 verteilt und gelangt zum Sicherheitsventil 40. Das Ventil 40 löst dann aus. Die Schicht 20 kann ferner flächig um die Stelle F an Volumen zunehmen und den Hochdruckgasbehälter 10 schützen.

In Fig. 2 ist das Detail A der Fig. 1 dargestellt. Es ist der Schichtaufbau des Hochdruckgasbehälters 10 umfassend den Liner 16, die faserverstärkte Schicht 14 und der intumeszenten Schicht 20 erkennbar. In der intumeszenten Schicht 20 ist das Befestigungsmittel 30 vorgesehen, welches hier als Einsatzelement 30 ausgebildet ist, das im bzw. unter der intumeszenten Schicht angeordnet ist. Das Einsatzelement 30 ist mit dem Sicherheitsventil 40 verbunden. Alternativ sind auch andere Befestigungselemente bzw-arten wie beispielsweise eine Schraubenverbindung denkbar. Die Sicherheitsventile können auch auf dem Fahrzeugblech, beispielsweise benachtbart zum Hochdruckgasbehälter 10 im Tunnel 50 und/oder an der Fahrzeugunterseite 52 befestigt werden. Eine Halterung der Sicherheitsventile 40 über Spannbänder ist ebenfalls denkbar.

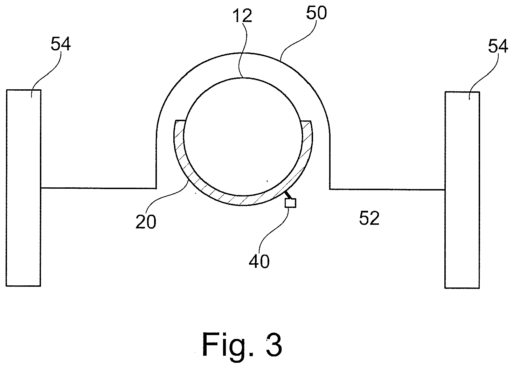

Fig. 3 zeigt die Einbausituation des Hochdruckgasbehälters 10 in einem Fahrzeug. Der Hochdruckgasbehälter 10 ist hier zwischen den Rädern 54 in einem Tunnel 50 angeordnet. Die intumeszente Schicht 20 ist hier als bogenförmiges Profil ausgestaltet, welches den Kern 12 des Hochdruckgasbehälters 10 zumindest teilweise umschließt und hier an dem Kern 12 dicht anliegt. Auf der Außenseite der intumeszenten Schicht 20 ist ein Sicherheitsventil 40 sichtbar, welches der Fahrbahn zugewandt ist. Die intumeszente Schicht 20 schützt den Hochdruckgasbehälter 10 vor thermischen und/oder mechanischen Einflüssen, die hier bspw. von Gegenständen, die sich zwischen Fahrzeugboden und Fahrbahn befinden, hervorgerufen werden.

Ferner kann anstatt einer im Querschnitt C-förmigen oder rohrförmigen intumeszenten Schicht 20 auch eine als Paneel ausgestaltete intumeszente Schicht 20 vorgesehen sein, das bevorzugt unterhalb des Fahrzeugbodens befestigt ist.

## Patentansprüche

1. Vorrichtung zum Schutz eines Hochdruckgasbehälters (10) eines Kraftfahrzeugs, umfassend:
- mindestens ein Sicherheitsventil (40); und
- eine intumeszente Schicht (20), die derart angeordnet und ausgebildet ist, dass die intumeszente Schicht (20) den Hochdruckgasbehälter (10) zumindest teilweise abschirmt, **dadurch gekennzeichnet,**
**dass** die intumeszente Schicht (20) ein intumeszentes Metallmaterial aufweist.

2. Vorrichtung nach Anspruch 1, **dadurch gekennzeichnet, dass** die intumeszente Schicht (20) direkt am Hochdruckgasbehälter (10) befestigbar ist und/oder am Hochdruckgasbehälter (10) zumindest teilweise anliegt.

3. Vorrichtung nach Anspruch 1 oder 2, **dadurch gekennzeichnet, dass** das intumeszente Metallmaterial ein intumeszentes Aluminiummaterial ist.

4. Vorrichtung nach einem der vorherigen Ansprüche, **dadurch gekennzeichnet, dass** die intumeszente Schicht (20) den Kraftstofftank im Querschnitt zumindest zur Hälfte umschließt.

5. Vorrichtung nach einem der vorherigen Ansprüche, **dadurch gekennzeichnet, dass** die intumeszente Schicht (20) als im Querschnitt C-förmiges Profil (20) oder als Rohr (20) ausgebildet ist, das im Inneren den Hochdruckgasbehälter (10) zumindest teilweise aufnimmt.

6. Vorrichtung nach einem der vorherigen Ansprüche, **dadurch gekennzeichnet, dass** die intumeszente Schicht (20) eine Wandstärke von 0,1 mm bis 40 mm, bevorzugt von 3 mm bis 20 mm, und besonders bevorzugt von 6 mm bis 15 mm aufweist.

7. Vorrichtung nach einem der vorherigen Ansprüche, **dadurch gekennzeichnet, dass** die intumeszente Schicht (20) mindestens ein Befestigungsmittel (30) zur Befestigung des Sicherheitsventiles (40) aufweist.

8. Hochdruckgasbehälter (10) für ein Kraftfahrzeug, umfassend eine Vorrichtung zum Schutz des Hochdruckgasbehälter (10) nach einem der vorherigen Ansprüche.

9. Hochdruckgasbehälter (10) nach Anspruch 8, **dadurch gekennzeichnet, dass** der Hockdruckgasbehälter eine faserverstärkte Schicht (14) aufweist, wobei die intumeszente Schicht (20) die faserverstärkte Schicht (14) zumindest teilweise umgibt.

10. Verfahren zur Herstellung eines Hochdruckgasbehälter (10) nach Anspruch 8 oder 9, **gekennzeichnet durch** die Schritte;
- Bereitstellen eines Kerns (12) des Hochdruckgasbehälter (10) ;
- Bereitstellen einer intumeszenten Schicht (20) nach einem der Ansprüche 1 bis 7;
- Vorsehen von mindestens einem Sicherheitsventil (40); und
- zumindest teilweises Aufschieben oder zumindest teilweises Umwickeln des Kerns (12) mit der intumeszente Schicht (20).

11. Verfahren nach Anspruch 10, wobei das mindestens eine Sicherheitsventil (40) an der äußeren Oberfläche der intumeszenten Schicht befestigt wird.

## Claims

1. A device for protecting a high-pressure gas tank (10) of a motor vehicle, comprising:
- at least one safety valve (40); and
- an intumescent layer (20), which is arranged and configured in such a way that the intumescent layer (20) at least partially shields the high-pressure gas tank (10), **characterised in that**
the intumescent layer (20) comprises an intumescent metal material.

2. A device according to claim 1, **characterised in that** the intumescent layer (20) can be secured directly to the high-pressure gas tank (10) and/or at least partially bears against the high-pressure gas tank (10).

3. A device according to claim 1 or 2, **characterised in that** the intumescent metal material is an intumescent aluminium material.

4. A device according to any one of the preceding claims, **characterised in that** the intumescent layer (20) encloses at least half of the fuel tank in cross-section.

5. A device according to any one of the preceding claims, **characterised in that** the intumescent layer (20) is configured as a profile (20) that is C-shaped in cross-section or as a tube (20), which in its interior at least partially receives the high-pressure gas tank (10).

6. A device according to any one of the preceding claims, **characterised in that** the intumescent layer (20) has a wall thickness of from 0.1 mm to 40 mm, preferably from 3 mm to 20 mm, and more especially preferably from 6 mm to 15 mm.

7. A device according to any one of the preceding claims, **characterised in that** the intumescent layer (20) comprises at least one securing means (30) for securing the safety valve (40).

8. A high-pressure gas tank (10) for a motor vehicle, comprising a device for protecting the high-pressure gas tank (10) according to any one of the preceding claims,

9. A high-pressure gas tank (10) according to claim 8, **characterised in that** the high-pressure gas tank comprises a fibre-reinforced layer (14), wherein the intumescent layer (20) at least partially surrounds the fibre-reinforced layer (14).

10. A method for producing a high-pressure gas tank (10) according to claim 8 or 9, **characterised by** the following steps:
- providing a core (12) of the high-pressure gas tank (10);
- providing an intumescent layer (20) according to any one of claims 1 to 7;
- providing at least one safety valve (40); and
- at least partially sliding the intumescent layer (20) onto the core (1.2) or at least partially wrapping the core (12) with the intumescent layer (20).

11. A method according to claim 10, wherein the at least one safety valve (40) is secured to the outer surface of the intumescent layer.

## Revendications

1. Dispositif de protection d'un réservoir de gaz haute pression comprenant :
- au moins une soupape de sureté (40), et
- une couche intumescente (20) qui est positionnée et réalisée de sorte qu'elle protège au moins partiellement le réservoir de gaz haute pression (10),
**caractérisé en ce que**
la couche intumescente (20) renferme un matériau métallique intumescent.

2. Dispositif conforme à la revendication 1,
**caractérisé en ce que**
la couche intumescente (20) peut être fixée directement sur le réservoir de gaz haute pression (10) et/ou s'applique au moins partiellement sur le réservoir de gaz haute pression (10).

3. Dispositif conforme à la revendication 1 ou 2,
**caractérisé en ce que**
le matériau métallique intumescent est un matériau intumescent à base d'aluminium.

4. Dispositif conforme à l'une des revendications précédentes, **caractérisé en ce que**
la couche intumescente (20) entoure le réservoir de carburant sur au moins la moitié de sa section.

5. Dispositif conforme à l'une des revendications précédentes, **caractérisé en ce que**
la couche intumescente (20) est réalisée sous la forme d'un profilé (20) ayant une section en forme de C ou d'un tube (20) qui reçoit au moins partiellement le réservoir de gaz haute-pression (10) à sa partie interne.

6. Dispositif conforme à l'une des revendications précédentes, **caractérisé en ce que**
la couche intumescente (20) a une épaisseur de 0,1 mm à 40 mm, de préférence de 3 mm à 20 mm et de façon particulièrement préférentielle,
de 6 mm à 15 mm.

7. Dispositif conforme à l'une des revendications précédentes, **caractérisé en ce que**
la couche intumescente (20) comporte au moins un moyen de fixation (30) pour permettre la fixation de la soupape de sureté (40).

8. Réservoir de gaz haute-pression (10) destiné à un véhicule comprenant un dispositif de protection du réservoir de gaz haute-pression (10) conforme à l'une des revendications précédentes.

9. Réservoir de gaz haute-pression (10) conforme à la revendication 8, **caractérisé en ce qu'**
il comporte une couche renforcée par des fibres (14), la couche intumescente (20) entourant au moins partiellement la couche renforcée par des fibres (14).

10. Procédé de fabrication d'un réservoir de gaz haute pression (10) conforme à la revendication 8 ou 9,
**caractérisé en ce qu'**
il comprend des étapes consistant à :
- se procurer le coeur (12) du réservoir de gaz haute pression (10),
- se procurer une couche intumescente (20) conforme à l'une des revendications 1 à 7,
- prévoir au moins une soupape de sureté (40), et
- enfiler au moins partiellement ou entourer au moins partiellement le coeur (12) avec la couche intumescente (20).

11. Procédé conforme à la revendication 10,
selon lequel la soupape de sureté (40) est fixée sur la surface externe de la couche intumescente.
